# EUROPÄISCHE PATENTSCHRIFT

(11) **EP 2 018 693 B1**
(45) Veröffentlichungstag und Bekanntmachung des Hinweises auf die Patenterteilung: **23.11.2011**
(21) Anmeldenummer: 06755244.8
(22) Anmeldetag: 18.05.2006
(51) Int. Cl.: H02G 3/22

(54) **STROMPROFIL FÜR KABELDURCHFÜHRUNGEN**
ELECTRICAL MOLDEDMOLDSECTION FOR CABLE LEAD-THROUGHS
PROFILE ELECTRIQUE POUR TRAVERSEES DE CABLES

(43) Veröffentlichungstag der Anmeldung: 28.01.2009
(73) Patentinhaber: Auto-Kabel Managementgesellschaft mbH, 79688 Hausen i.W. (DE)
(72) Erfinder: URGATZ, Alexander, 51371 Leverkusen (DE)
(74) Vertreter: Cohausz & Florack
(86) Internationale Anmeldenummer: PCT/EP2006/062410
(87) Internationale Veröffentlichungsnummer: WO 2007/134634

(56) Entgegenhaltungen:
- DE-A1- 3 122 335
- US-A1- 2002 096 379

## Beschreibung

Die Anmeldung betrifft im Allgemeinen ein Stromprofil zur Kabeldurchführung eines Kraftfahrzeugkabels durch eine Kraftfahrzeugwand, insbesondere ein Blech einer Kraftfahrzeugkarosse, mit einem ersten Anschluss für ein Stromkabel und einem zweiten Anschluss für ein Stromkabel. Dokument DE-A1-3122335 beschreibt ein solches Stromprofil. Weiterhin betrifft die Anmeldung eine Befestigungseinrichtung zum Befestigen eines solchen Stromprofils an einer Wand, insbesondere einem Karosserieblech, eines Kraftfahrzeugs. Außerdem betrifft die Anmeldung ein System zum Befestigen eines Stromprofils an einer Wand eines Kraftfahrzeugs sowie ein Verfahren hierzu.

Die elektrische Versorgung von Komponenten in Kraftfahrzeugen gewinnt an Bedeutung. Zunehmend wird eine immer größer werdende Anzahl von Komponenten innerhalb von Kraftfahrzeugen durch elektrische Energie betrieben. Dazu ist es notwendig, dass Energieleiter von der Batterie aus weit verzweigt in der Kraftfahrzeugkarosse angeordnet werden. Es ist üblich, die Batteriekabelstränge am Unterboden oder im Mittelkanal eines Kraftfahrzeugs zu führen. Für die Kontaktierung von Komponenten innerhalb des Kraftfahrzeugs ist es deshalb häufig notwendig, die Kabel durch Bleche oder sonstige Wände innerhalb des Fahrzeugs zu führen.

Zur Bereitstellung von Abgriffen an Batteriekabeln werden so genannte Übergabestützpunkte eingesetzt. Bei der Verwendung von Flachleitern für Batterieleitungen ist es dann üblich, diese Übergabestützpunkte durch an dem Flachleiter angeordnete Bolzen zu bilden. Zur Kontaktierung werden die Bolzen durch Bohrungen in die Flachleiter geschoben. Durch eine Verschraubung mit einer Hülse werden die Bolzen dann mit dem Flachleiter kraftschlüssig verbunden.

Nachteilig bei den bekannten Stromprofilen zur Kabeldurchführung durch eine Kraftfahrzeuggehäusewand ist aber, dass das Aufschrauben der Hülse auf den Bolzen einen vergrößerten Bau- und Montageraum erfordert. Außerdem ist die Montagedauer beim Aufschrauben der Hülsen groß. Schließlich können sich die verschraubten Hülsen durch Vibrationen lösen.

Daher bestand die Aufgabe der Anmeldung darin, ein Stromprofil, eine Befestigungseinrichtung, ein System und ein Verfahren zum Befestigen eines Stromprofils an einer Kraftfahrzeugwand oder einer Kraftfahrzeuggehaüsewand zur Verfügung zu stellen, welches kostengünstig ist, einen geringen Bauraum einnimmt und leicht zu montieren ist.

Die zuvor aufgezeigte und aus dem Stand der Technik hergeleitete Aufgabe wird durch ein Stromprofil gelöst, bei dem das Stromprofil zwischen dem ersten Anschluss und dem zweiten Anschluss einen die Kabeldurchführung durch die Wand ermöglichenden Versatz aufweist, und bei dem das Stromprofil eine Aufnahme für eine Befestigungseinrichtung aufweist, derart, dass die Befestigungseinrichtung zum Befestigen des Stromprofils an der Wand in die Aufnahme einschiebbar ist
- Wobei ein erster Finger in die Aufnahme des Stromprofils einschiebbar ist,
- wobei ein zweiter Finger im eingeschobenen Zustand eng an dem Versatz anliegt.

Das Stromprofil ist durch den Versatz so geformt, dass es eine Kabeldurchführung durch ein Karosserieblech oder einer Kraftfahrzeuggehaüsewand ermöglicht. Diesseits und jenseits des Blechs befindet sich dann jeweils ein Anschluss des Stromprofils. Zum Befestigen des Stromprofils wird vorgeschlagen, dieses mittels einer Befestigungseinrichtung an der Wand zu fixieren. Hierzu wird erfindungsgemäß die Befestigungseinrichtung durch eine transversale Bewegung in die Aufnahme eingeschoben.

Durch das Einschieben der Befestigungseinrichtung in die Aufnahme kann der Bauraum klein gehalten werden. Es sind keine Gewinde notwendig, auf die eine Hülse aufgeschraubt werden muss. Das Stromprofil kann sich diesseits und jenseits der Durchführung eng an das Gehäuse anschmiegen. Lediglich im Versatz selber, das heißt an der Stelle der Durchführung, ist eine Aufnahme notwendig, in die die Befestigungseinrichtung eingeschoben werden kann. Das Einschieben der Befestigungseinrichtung ist bei der Montage besonders einfach, was die Montagezeiten erheblich verringert. Die Anzahl der verwendeten Bauteile ist erheblich geringer als bei herkömmlichen Lösungen, da neben dem Stromprofil lediglich eine Befestigungseinrichtung notwendig ist. Ein Bolzen, sowie eine darauf aufgeschraubte Hülse sind nicht mehr notwendig.

Gemäß eines vorteilhaften Ausführungsbeispiels wird vorgeschlagen, dass der Versatz stufenförmig ist. Das bedeutet, dass der Versatz einen Sprung in dem Stromprofil darstellt. Dieser Versatz wird so gestaltet, dass er in die Öffnung in der Kraftfahrzeugwand für die Kabeldurchführung passt. Die Höhe des Versatzes ist so gewählt, dass sich das Stromprofil eng an die Fahrzeugwand anschmiegt und dennoch eine Aufnahme für die Befestigungseinrichtung vorhanden ist.

Um eine gute Fixierung des Stromprofils an der Kraftfahrzeugwand zu gewährleisten, wird vorgeschlagen, dass die Aufnahme im Wesentlichen in dem Versatz angeordnet ist. In diesem Fall kann die Fixierung des Stromprofils an der Kraftfahrzeugwand unmittelbar an dem Versatz erfolgen. Dies gewährleistet einen guten Kraftschluss zwischen Stromprofil und Kraftfahrzeugwand.

Bevorzugt ist es, wenn das Stromprofil in einer Durchgangsöffnung der Wand angeordnet ist.

Außerdem ist es bevorzugt, wenn die Aufnahme eine Durchgangsöffnung in dem Stromprofil ist. In diesem Fall kann die Befestigungseinrichtung durch die Öffnung der Aufnahme geschoben werden. Ein Verrasten der Befestigungseinrichtung an dem Stromprofil wird hierdurch ermöglicht. Dies kann durch entsprechende Gestaltung der Befestigungseinrichtung ermöglicht werden.

Eine besonders einfache und sichere Montage ergibt sich dadurch, dass die Aufnahme im Wesentlichen parallel zur Oberfläche des Gehäuses verläuft. In diesem Fall kann die Befestigungseinrichtung parallel zur Oberfläche der Wand in die Aufnahme eingeschoben werden. Beispielsweise ist die Aufnahme so gestaltet, dass sie bündig mit der Oberfläche der Wand abschließt, so dass, wenn die Befestigungseinrichtung in die Aufnahme eingeschoben ist, dass Stromprofil an der Wand des Kraftfahrzeugs anliegt.

Hierzu wird auch vorgeschlagen, dass die Aufnahme derart angeordnet ist, dass nach Einschieben der Befestigungseinrichtung das Stromprofil eng an dem Gehäuse anliegt. In diesem Fall ist die Aufnahme vorzugsweise derart geformt, dass ihr Innenprofil dem äußeren Profil der Befestigungseinrichtung, insbesondere dem in die Aufnahme zu schiebenden Teil der Befestigungseinrichtung, entspricht.

Durch das Einschieben der Befestigungseinrichtung in die Aufnahme wird das Stromprofil auf der anderen Seite an die Wand gedrückt. Beim Einschieben der Befestigungseinrichtung in die Aufnahme wird eine Kraft senkrecht zur Einschubrichtung in das Stromprofil eingebracht, so dass dieses fest an die Wand gedrückt wird.

Für den Anschluss von Stromkabeln wird vorgeschlagen, dass an zumindest einem Anschluss ein Kabelschuh angeordnet ist. Dieser Kabelschuh kann an das Stromprofil angeschweißt, oder angelötet sein. Andere form-, kraft- und/oder stoffschlüssige Verbindungen sind möglich. Es ist auch möglich, dass der Kabelschuh einstückig aus dem Stromprofil gebildet ist. Der Kabelschuh kann als Crimp-Schuh gebildet sein. Außerdem kann der Kabelschuh derart geformt sein, dass sich die Stromkabel mittels Reibschweißen oder Ultraschallschweißen daran anordnen lassen.

Um unterschiedlichen baulichen Bedingungen gerecht zu werden, wird auch vorgeschlagen, dass der erste Anschluss und der zweite Anschluss unmittelbar am Versatz einen Winkel einschließen. Hierdurch kann sich die Ausbreitungsrichtung des Stromprofils an der Stelle des Versatzes verändern.

Auch ist es möglich, dass das Profil so geformt ist, dass die Befestigungseinrichtung zwischen einem Anschluss und dem Gehäuse eingreift, wobei auf der der Befestigungseinrichtung gegenüber liegenden Seite des Gehäuses der andere Anschluss an dem Gehäuse anliegt. Der Winkel, den die Anschlüsse einschließen, kann zwischen 0 und 180° liegen. Bevorzugt ist ein spitzer Winkel. Auch ist es möglich, dass die Anschlüsse in entgegen gesetzter Richtung verlaufen, so dass sie auf einander gegenüberliegenden Seiten des Gehäuses parallel zueinander angeordnet sind.

Um die zur Einschubrichtung normale Kraft, die durch die Befestigungseinrichtung ausgeübt wird, aufzunehmen, wird vorgeschlagen, dass das Stromprofil eine Stützfläche aufweist. Diese Stützfläche ist bevorzugt auf der Seite des Stromprofils angeordnet, die nicht die Befestigungseinrichtung aufnimmt. Wird die Befestigungseinrichtung in die Aufnahme geschoben, so kann die Normalkraft von der Stützfläche aufgenommen werden. Die Stützfläche ist bevorzugt größer als die Durchgangsöffnung in der Wand. Durch die Stützfläche wird gewährleistet, dass bei Befestigung mit dem Befestigungsmittel zumindest die Stützfläche an dem Gehäuse anliegt. Die Stützfläche kann auch mit O-Ringen versehen sein, so dass eine Abdichtung der Durchgangsöffnung zumindest von einer Seite erfolgen kann. Wird beispielsweise die Stützfläche auf einer Außenseite angeordnet und die Befestigungseinrichtung auf der Innenseite der Wand eingeschoben, so wird durch den Dichtring das Gehäuse gegenüber Umwelteinflüssen im Wesentlichen angedichtet.

Um die Montage des Stromprofils zu vereinfachen, wird vorgeschlagen, dass an dem ersten Anschluss bzw. der Stützfläche, eine Rastnase angeordnet ist, derart, dass diese beim Einschieben des Stromprofils in eine Öffnung der Wand an der Wand verrastet. Die Rastnase ist so geformt, dass sie im äußeren Bereich der Stützfläche angeordnet ist. Schiebt der Monteur das Stromprofil in die Öffnung in dem Blech, so gewährleistet die Rastnase eine Vorverrastung des Stromprofils an dem Blech. Danach kann die Befestigungseinrichtung in die Aufnahme geschoben werden. Es ist bevorzugt, wenn die Rastnase und der äußere Durchmesser des Versatzes in etwa einen Abstand aufweisen der den Durchmesser der Öffnung in der Wand entspricht. Dann nämlich wird gewährleistet, dass die Verrastung durch die Rastnase an dem Blech durch ein Gegenlager, hier die äußere Fläche des Vorsprungs, gelagert ist.

Um zu verhindern, dass eine Kontaktierung zwischen Stromprofil und Wand erfolgt, wird vorgeschlagen, dass das Stromprofil zwischen dem ersten Anschluss und dem zweiten Anschluss mit einem Isolationsmantel versehen ist. Dieser Isolationsmantel kann beispielsweise eine Umspritzung sein. Der Isolationsmantel kann dabei die gesamte Oberfläche des Stromprofils, mit Ausnahme der äußeren Anschlüsse, einschließen.

Bevorzugt ist es, wenn der erste Anschluss oder der zweite Anschluss ein Flachleiter ist.

Ein weiterer Gegenstand der Anmeldung ist eine Befestigungseinrichtung zum Befestigen eines zuvor beschriebenen Stromprofils an einer Wand eines Kraftfahrzeugs mit zumindest zwei Fingern, wobei ein erster Finger derart gebildet ist, dass er in die Aufnahme des Stromprofils einschiebbar ist und wobei ein zweiter Finger derart von dem ersten Finger beabstandet ist, dass er im eingeschobenen Zustand eng an dem Versatz anliegt.

Eine Endposition der Befestigungseinrichtung im eingeschobenen Zustand ist durch eine Fläche des Versatzes gebildet. Wenn die Befestigungsvorrichtung in die Aufnahme eingeschoben ist, liegt diese mit ihren Fingern am Versatz an.

Es wird ferner bevorzugt, dass der erste Finger sich in Einschubrichtung verjüngt, derart, dass der erste Finger im eingeschobenen Zustand eng an den Innenwänden der Aufnahme anliegt. Der erste Finger ist so geformt, dass er sich zu Beginn des Einschiebens leicht in die Aufnahme einpasst. Mit fortschreitender Einschubtiefe nähert sich das Profil des Fingers dem Innenprofil der Aufnahme an, und im eingeschobenen Zustand liegt der erste Finger eng an den Innenwänden der Aufnahme an.

Liegt der untere Boden der Aufnahme bspw. die Stützfläche unterhalb des Niveaus der Wand, so kann durch das Einschieben eine Normalkraft auf das Stromprofil ausgeübt werden. Dies bewirkt, dass das Stromprofil mit seiner Stützfläche eng an der Wand anliegt.

Um Lageveränderungen der Befestigungseinrichtung in der Aufnahme zu verhindern, wird auch vorgeschlagen, dass die Breite des ersten Fingers im Wesentlichen der Breite der Aufnahme entspricht.

Gemäß eines vorteilhaften Ausführungsbeispieles wird vorgeschlagen, dass ein weiterer Finger neben dem ersten Finger angeordnet ist, wobei der weitere Finger eine Rastnase aufweist, derart, dass die Rastnase im eingeschobenen Zustand die Aufnahme hintergreift, so dass die Befestigungseinrichtung an dem Stromprofil verrastet ist.

Um zu verhindern, dass sich das Stromprofil gegenüber der Durchgangsöffnung neigt, wird auch vorgeschlagen, dass der weitere Finger im eingeschobenen Zustand zwischen der Wand und dem zweiten Anschluss angeordnet ist. Der zweite Anschluss kann so am Versatz angeordnet sein, dass ein Zwischenraum zwischen der Wand und dem zweiten Anschluss entsteht. In diesen Zwischenraum kann der weitere Finger eingreifen. Durch diesen Eingriff kann der zweite Anschluss an der Wand gestützt werden. In diesem Fall ist es besonders bevorzugt, wenn die Höhe des weiteren Fingers dem Abstand zwischen der Wand und dem zweiten Anschluss in etwa entspricht.

Ein weiterer Gegenstand der Anmeldung ist ein System zum Befestigen eines Stromprofils an einer Wand eines Kraftfahrzeugs mit einem zuvor beschriebenen Stromprofil und einer zuvor beschriebenen Befestigungseinrichtung.

Ein zusätzlicher Gegenstand der Anmeldung ist ein Verfahren zum Befestigen eines Stromprofils an einem Gehäuse eines Kraftfahrzeugs, bei dem ein zuvor beschriebenes Stromprofil in eine Durchgangsöffnung des Gehäuses geschoben wird, so dass ein Versatz des Stromprofils in der Durchgangsöffnung angeordnet ist, und bei dem ein zuvor beschriebenes Befestigungsmittel in die Aufnahme des Stromprofils durch eine transversale Bewegung eingeschoben wird, so dass das Stromprofil kraftschlüssig mit dem Gehäuse verbunden ist.

Nachfolgend wird die Anmeldung anhand einer ein Ausführungsbeispiel zeigenden Zeichnung näher erläutert. In der Zeichnung zeigen:
- Fig. 1: eine beispielhafte Ansicht eines Stromprofils;
- Fig. 2: eine beispielhafte Ansicht einer Befestigungseinrichtung;
- Fig. 3: eine Draufsicht auf ein Befestigungssystem im befestigen Zustand;
- Fig. 4: eine Unteransicht eines Befestigungssystems im befestigten Zustand;
- Fig. 5: eine Ansicht eines Systems im nicht befestigten Zustand;
- Fig. 6: eine Ansicht eines Systems im befestigten Zustand.

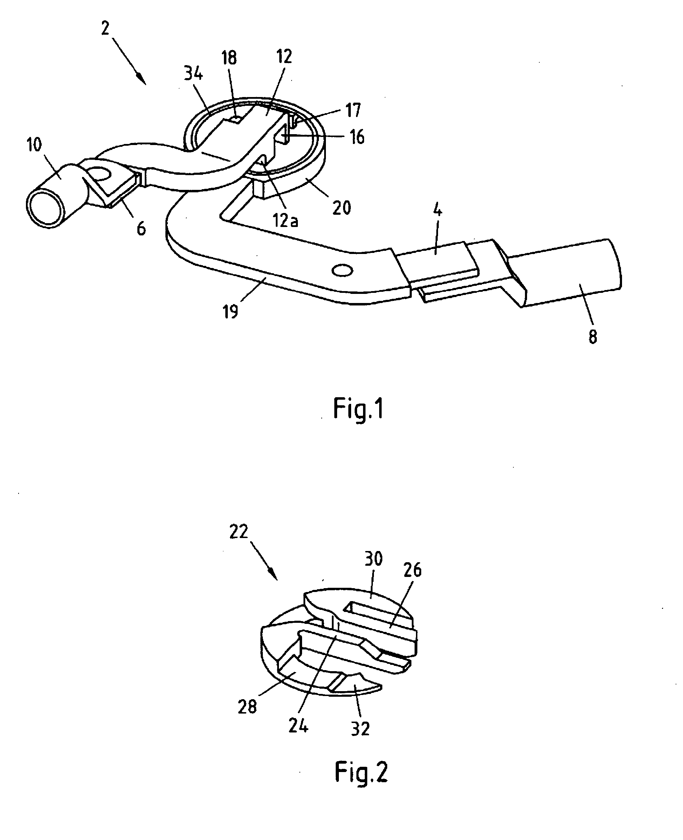

Fig. 1 zeigt ein Stromprofil 2 mit einem ersten Anschluss 4 und einem zweiten Anschluss 6. An dem ersten Anschluss 4 ist ein Kabelschuh 8 befestigt. An dem zweiten Anschluss 6 ist ein weiterer Kabelschuh 10 angeordnet. Zwischen dem ersten Anschluss 4 und dem zweiten Anschluss 6 ist ein Versatz 12 im Stromprofil 2 vorgesehen. Der Versatz 12 ist stufenförmig, so dass der Anschluss 4 und der Anschluss 6 auf verschiedenen Ebenen liegen. Der Versatz 12 ist so geformt, dass zwischen dem ersten Anschluss 4 und dem zweiten Anschluss 6 ein Fahrzeugblech 14 angeordnet sein kann. In dem Versatz 12 ist eine Aufnahme 16 als Durchgangsöffnung vorgesehen. Die Aufnahme 16 ist so in dem Versatz 12 angeordnet, dass sie im Wesentlichen oberhalb der Ebene des Fahrzeugbleches 14 auf der Seite des zweiten Anschluss 6 liegt.

Das Stromprofil 2 ist durch einen Isolationsmantel 19 isoliert. An den Enden der Anschlüsse 4, 6, an denen die Kabelschuhe 8, 10 angeordnet sind, ist der metallische Kern des Stromprofils 2 freigelegt. Die Kabelschuhe 8, 10 können mittels Löten oder Schweißen mit dem Stromprofil 2 materialschlüssig verbunden werden, oder direkt aus den Anschlüssen 4, 6 gebildet sein.

In unmittelbarer Umgebung des Versatzes 12 ist eine Belüftungsöffnung 18 vorgesehen. Durch die Belüftungsöffnung 18 kann ein Belüftungsschlauch zur Belüftung der Batterie geschoben werden.

Zusätzlich ist eine Rastnase 17 vorgesehen. Der Abstand zwischen Rastnase 17 und äußerem Rand des Versatzes 12 ist so gewählt, dass dieser in etwa Größe der Durchgangsbohrung in dem Blech 14 entspricht. Beim Montieren ermöglicht die Rastnase 17 ein Vorverrasten des Stromprofils an dem Blech, so dass der Monteur beim Einschieben der Befestigungseinrichtung das Stromprofil nicht mehr selbst halten muss.

Fig. 2 zeigt eine Befestigungseinrichtung 22. Die Befestigungseinrichtung 22 weist einen ersten Finger 24, einen zweiten Finger 26, einen dritten Finger 28 und einen vierten Finger 30 auf.

Die Finger 24-30 erstrecken sich parallel zueinander. Der erste Finger 24 verjüngt sich ausgehend von der Grundfläche der Befestigungseinrichtung 22 in Einschubrichtung. Die Verjüngung kann rampenförmig sein. Das Profil des ersten Fingers 24 entspricht zumindest in der nähe der Grundfläche dem Innenprofil der Aufnahme 16.

Der zweite Finger 26 verläuft parallel beabstandet zu dem ersten Finger 24. Der Zwischenraum zwischen dem ersten Finger 24 und dem zweiten Finger 26 entspricht in etwa der Breite des Steges zwischen der Außenfläche des Versatzes 12 und der Innenfläche der Aufnahme 16.

Der dritte Finger 28 ist flacher gebildet als der erste Finger 24 und der zweite Finger 26. Der dritte Finger 28 weist an seinem Ende eine Rastnase 32 auf. Der dritte Finger 28 hintergreift so den Versatz 12, um eine Verrastung zu gewährleisten.

Schließlich ist ein vierter Finger 30 vorgesehen, der neben dem zweiten Finger 26 angeordnet ist. Der Zwischenraum zwischen dem vierten Finger 30 und dem zweiten Finger 26 kann so geformt sein, dass dieser die Rastnase 34 aufnimmt, so dass diese die Befestigung nicht behindert.

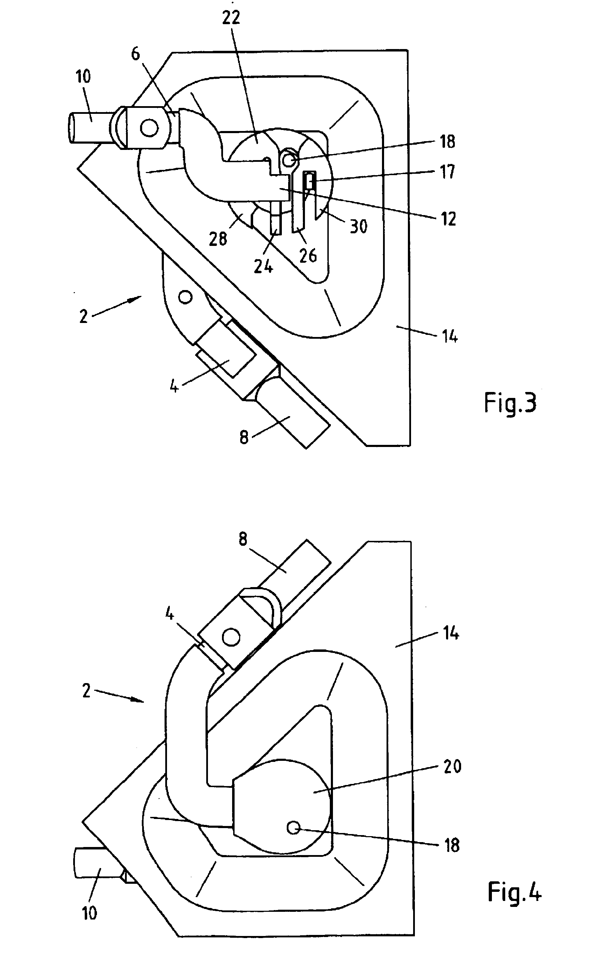

Fig. 3 zeigt das Befestigungssystem in einem befestigten Zustand. Die Befestigungseinrichtung 22 ist in die Aufnahme 16 des Versatzes 12 eingeschoben. Der erste Finger 24 durchgreift die Aufnahme 16. Die Befestigungseinrichtung 22 liegt zwischen dem ersten Finger 24 und dem zweiten Finger 26 eng an dem Versatz 12 an. Der dritte Finger 28 liegt zwischen dem Fahrzeugblech 14 und dem zweiten Anschluss 6. Die Rastnase 32 hintergreift den Versatz 12, so dass die Befestigungseinrichtung 22 an dem Stromprofil 2 verrastet. Die Rastnase 17 ist an dem Blech 14 verrastet und gegengelagert durch die äußere Fläche des Versatzes 12, der an dem Innendurchmesser der Bohrung in dem Blech 14 verankert ist.

Fig. 4 zeigt das Befestigungssystem in einer Unteransicht. Gezeigt ist das Fahrzeugblech 14, der erste Anschluss 4 sowie den zweiten Anschluss 6 und die Stützfläche 20. Angedeutet ist außerdem die Belüftungsöffnung 18. Die Stützfläche 20 ermöglicht es, dass das Stromprofil 2 kraftschlüssig mit dem Fahrzeugblech 14 verbunden wird.

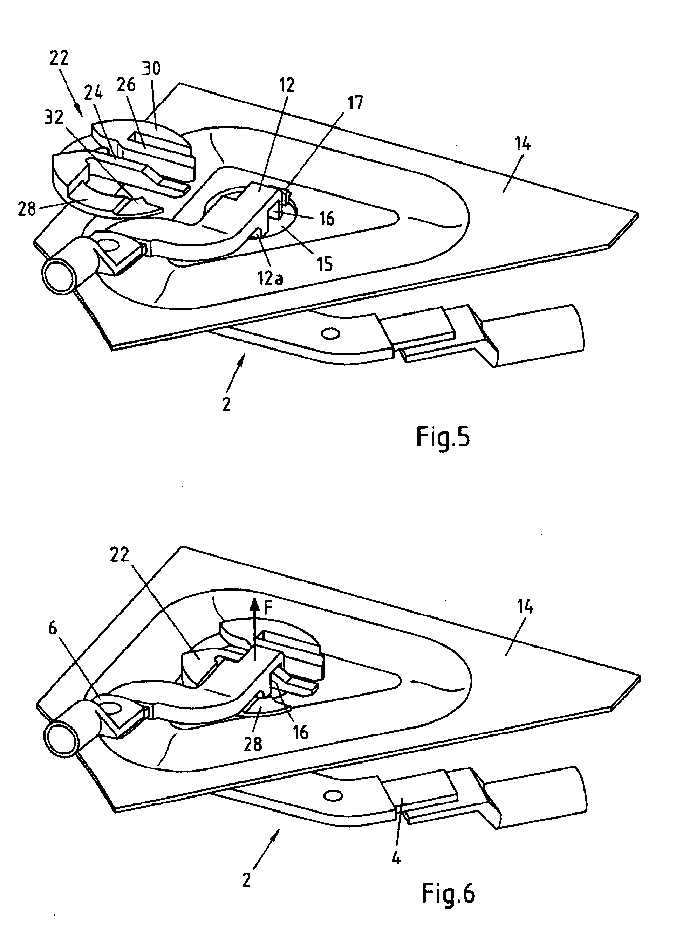

Fig. 5 zeigt eine Ansicht eines Befestigungssystems. In der gezeigten Ansicht ist die Befestigungseinrichtung 22 noch nicht in die Aufnahme 16 eingeschoben. Zu erkennen ist, dass an dem Fahrzeugblech 14 die Rastnase 17 verrastet ist. Die äußere Fläche 12a des Versatzes 12 liegt unmittelbar am Innendurchmesser der Bohrung 15 in dem Blech 14 an. Hierdurch wird die Rastnase 34 gegengelagert und kann das Blech 14 hintergreifen. Eine Montagehilfe ist durch diese Primärverrastung gewährleistet.

Durch die Bohrung 15 ist das Stromprofil 2 eingesteckt. Weiter zu erkennen ist, dass das Fahrzeugblech 14 in der Umgebung der Bohrung 15 wannenförmig gebildet ist. Hierdurch kann der gesamte Bauraum gering gehalten werden. Die Befestigungseinrichtung 22 lässt sich hierdurch problemlos in die Aufnahme 16 einschieben.

Fig. 6 zeigt das Befestigungssystem mit der Befestigungseinrichtung 22 im eingeschobenen Zustand. Die Befestigungseinrichtung 22 ist ganz in die Aufnahme 16 eingeschoben. Der dritte Finger 28 liegt zwischen zweitem Anschluss 6 und dem Fahrzeugblech 14.

Durch das Einschieben der Befestigungseinrichtung 22 in die Aufnahme 16 wird eine Kraft F senkrecht zu der Ebene des ersten Anschluss 4 auf das Stromprofil 2 ausgeübt. Durch diese Kraft F wird das Stromprofil 2 mit seiner Stützfläche 20 an das Fahrzeugblech 14 gedrückt. Hierdurch kann eine Abdichtung durch die Dichtringe 19 an der Stützfläche 20 erfolgen.

Durch das beschriebene System kann bei kleinem Bauraum eine kostengünstige und leicht zu monierende Kabeldurchführung hergestellt werden. Ein Übergabestützpunkt ist daher leicht zu realisieren. Batteriekabel können mittels geeigneter Verfahren an den Kabelschuhen 8, 10 befestigt werden.

## Patentansprüche

1. Stromprofil zur Kabeldurchführung eines Kraftfahrzeugkabels durch eine Kraftfahrzeugwand oder durch ein Kraftfahrzeuggehaüsewand mit
- einem ersten Anschluss für ein Stromkabel, und
- einem zweiten Anschluss für ein Stromkabel,
- wobei das zwischen dem ersten Anschluss und dem zweiten Anschluss einen die Kabeldurchführung durch die Wand ermöglichenden Versatz aufweist,
**dadurch gekennzeichnet, dass** das Stromprofil eine Aufnahme für eine Befestigungseinrichtung mit zumindest zwei Fingern aufweist, derart, dass die Befestigungseinrichtung zum Befestigen des Stromprofil an der Wand in die Aufnahme einschiebbar ist,
- wobei ein erster Finger in die Aufnahme des Stromprofils einschiebbar ist, und
- wobei ein zweiter Finger im eingeschobenen Zustand eng an dem Versatz anliegt.

2. Stromprofil nach Anspruch 1, **dadurch gekennzeichnet, dass** die Befestigungseinrichtung parallel zur Oberfläche der Wand in die Aufnahme einschiebbar ist.

3. Stromprofil nach einem der vorangehenden Ansprüche,
**dadurch gekennzeichnet, dass** die Befestigungseinrichtung durch eine transversale Bewegung in die Aufnahme einschiebbar ist.

4. Stromprofil nach einem der vorangehenden Ansprüche,
**dadurch gekennzeichnet, dass** der Versatz stufenförmig ist.

5. Stromprofil nach einem der vorangehenden Ansprüche,
**dadurch gekennzeichnet, dass** die Aufnahme im Wesentlichen in dem Versatz angeordnet ist.

6. Stromprofil nach einem der vorangehenden Ansprüche,
**dadurch gekennzeichnet, dass** das Stromprofil in einer Durchgangsöffnung der Wand angeordnet ist.

7. Stromprofil nach einem der vorangehenden Ansprüche,
**dadurch gekennzeichnet, dass** die Aufnahme eine Durchgangsöffnung in dem Stromprofil ist.

8. Stromprofil nach einem der vorangehenden Ansprüche,
**dadurch gekennzeichnet, dass** die Aufnahme im Wesentlichen parallel zur Oberfläche des Gehäuses verläuft.

9. Stromprofil nach einem der vorangehenden Ansprüche,
**dadurch gekennzeichnet, dass** die Aufnahme derart angeordnet ist, dass nach Einschieben der Befestigungseinrichtung das Stromprofil eng an dem Gehäuse anliegt.

10. Stromprofil nach einem der vorangehenden Ansprüche,
**dadurch gekennzeichnet, dass** an zumindest einem Anschluss ein Kabelschuh angeordnet ist.

11. Stromprofil nach einem der vorangehenden Ansprüche,
**dadurch gekennzeichnet, dass** der erste Anschluss und der zweite Anschluss unmittelbar am Versatz einen Winkel einschließen.

12. Stromprofil nach einem der vorangehenden Ansprüche,
**dadurch gekennzeichnet, dass** das Stromprofil eine Stützfläche, die größer als die Durchgangsöffnung in der Wand ist, aufweist, derart, dass bei Befestigung mit dem Befestigungsmittel zumindest die Stützfläche an dem Gehäuse anliegt.

13. Stromprofil nach einem der vorangehenden Ansprüche,
**dadurch gekennzeichnet, dass** an dem ersten Anschluss eine Rastnase angeordnet ist, derart, dass diese beim Einschieben des Stromprofils in eine Öffnung der Wand an der Wand verrastet.

14. Stromprofil nach einem der vorangehenden Ansprüche,
**dadurch gekennzeichnet, dass** das Stromprofil zwischen dem ersten Anschluss und dem zweiten Anschluss mit einem Isolationsmantel versehen ist.

15. Stromprofil nach einem der vorangehenden Ansprüche,
**dadurch gekennzeichnet, dass** der erste Anschluss und/oder der zweite Anschluss ein Flachleiter ist.

16. Befestigungseinrichtung zum Befestigen eines Stromprofils nach Anspruch 1 an einer Wand eines Kraftfahrzeugs mit
- zumindest zwei Fingern,
- wobei ein erster Finger derart gebildet ist, dass er in die Aufnahme des Stromprofils einschiebbar ist, und
- wobei ein zweiter Finger derart von dem ersten Finger beabstandet ist, dass er im eingeschobenen Zustand eng an dem Versatz anliegt.

17. Befestigungseinrichtung nach Anspruch 16, **dadurch gekennzeichnet, dass** ein zwischen dem ersten Finger und dem zweiten Finger gebildeter Zwischenraum derart geformt ist, dass im eingeschobenen Zustand der Dorn in den Zwischenraum eingreift.

18. Befestigungseinrichtung nach einem der vorangehenden Ansprüche, **dadurch gekennzeichnet, dass** der erste Finger sich in Einschubrichtung verjüngt, derart, dass der erste Finger im eingeschobenen Zustand eng an den Innenwänden der Aufnahme anliegt.

19. Befestigungseinrichtung nach einem der vorangehenden Ansprüche, **dadurch gekennzeichnet, dass** die Breite des ersten Fingers im Wesentlichen der Breite der Aufnahme entspricht.

20. Befestigungseinrichtung nach einem der vorangehenden Ansprüche, **dadurch gekennzeichnet, dass** ein weiterer Finger neben dem ersten Finger angeordnet ist, wobei der weitere Finger eine Rastnase aufweist, derart, dass die Rastnase im eingeschobenen Zustand die Aufnahme hintergreift, so dass die Befestigungseinrichtung an dem Stromprofil verrastet ist.

21. Befestigungseinrichtung nach einem der vorangehenden Ansprüche, **dadurch gekennzeichnet, dass** der weitere Finger im eingeschobenen Zustand zwischen der Wand und dem zweiten Anschluss angeordnet ist.

22. Befestigungseinrichtung nach einem der vorangehenden Ansprüche, **dadurch gekennzeichnet, dass** die Höhe des weiteren Fingers dem Abstand zwischen der Wand und dem zweiten Anschluss in etwa entspricht.

23. System zum Befestigen eines Stromprofils an einer Wand eines Kraftfahrzeugs mit
- einem Stromprofil nach Anspruch 1, und
- einer Befestigungseinrichtung nach Anspruch 16.

24. Verfahren zum Befestigen eines Stromprofils an einem Gehäuse eines Kraftfahrzeugs, bei dem
- ein Stromprofil nach Anspruch 1 in eine Durchgangsöffnung des Gehäuses geschoben wird, so dass ein Versatz des Stromprofils in der Durchgangsöffnung angeordnet ist, und
- bei dem ein Befestigungsmittel nach Anspruch 16 in die Aufnahme des Stromprofils durch eine transversale Bewegung eingeschoben wird, so dass das Stromprofil kraftschlüssig mit dem Gehäuse verbunden ist.

## Claims

1. Current profile for feeding a motor vehicle cable through a wall in a motor vehicle or through a wall of a vehicle body, with
- a first connection for a cable, and
- a second connection for a cable,
- wherein the current profile between the first connection and the second connection has an offset element which makes feeding of the cable through the wall possible,
- **characterised in that in that** the current profile has a mounting for a securing device with at least two fingers, in such a manner that the securing device can be pushed into the mounting in order to secure the current profile to the wall,
- wherein a first finger can be pushed into the mounting of the current profile, and
- wherein a second finger is in close contact with the offset element in the inserted state.

2. Current profile according to claim 1, **characterized in that** the securing device can be pushed into the mounting in parallel to the surface of the wall.

3. Current profile according to any one of the preceeding claims, **characterized in that** the securing device can be pushed into the mounting by a transversal movement.

4. Current profile according to Claim 1, **characterised in that** the offset element is step-shaped.

5. Current profile according to any one of the preceding claims, **characterised in that** the mounting is essentially arranged in the offset element.

6. Current profile according to any one of the preceding claims, **characterised in that** the current profile is arranged in a passage aperture in the wall.

7. Current profile according to any one of the preceding claims, **characterised in that** the mounting is a passage aperture in the current profile.

8. Current profile according to any one of the preceding claims, **characterised in that** the mounting runs essentially parallel to the surface of the housing.

9. Current profile according to any one of the preceding claims, **characterised in that** the mounting is arranged in such a way that, after the securing device has been pushed in, the current profile is in close contact with the housing.

10. Current profile according to any one of the preceding claims, **characterised in that** a cable shoe is arranged at at least one connection.

11. Current profile according to any one of the preceding claims, **characterised in that** the first connection and the second connection enclose an angle directly at the offset element.

12. Current profile according to any one of the preceding claims, **characterised in that** the current profile has a support surface which is larger than the passage aperture in the wall, in such a way that, on securing with the securing means, at least the support surface is in contact with the housing.

13. Current profile according to any one of the preceding claims, **characterised in that** an engagement lug is arranged at the first connection, in such a way that, when the current profile is pushed into an aperture in the wall, the engagement lug engages at the wall.

14. Current profile according to any one of the preceding claims, **characterised in that** the current profile is provided with insulation cladding between the first connection and the second connection.

15. Current profile according to any one of the preceding claims, **characterised in that** the first connection and/or the second connection is a flat conductor.

16. Securing device for securing a current profile according to Claim 1 to a wall of a motor vehicle, with
- at least two fingers,
- wherein a first finger is formed in such a way that it can be pushed into the mounting of the current profile, and
- wherein a second finger is located at a distance interval from the first finger in such a way that in the inserted state it is in close contact with the offset element.

17. Securing device according to Claim 16, **characterised in that** an intermediate space is formed between the first finger and the second finger in such a way that in the inserted space the pin engages into the intermediate space.

18. Securing device according to any one of the preceding claims, **characterised in that** the first finger tapers in the insertion direction in such a way that the first finger in the inserted state is in close contact with the inner walls of the mounting.

19. Securing device according to any one of the preceding claims, **characterised in that** the width of the first finger corresponds essentially to the width of the mounting.

20. Securing device according to any one of the preceding claims, **characterised in that** a further finger is arranged next to the first finger, wherein the further finger has an engagement lug, in such a manner that the engagement lug in the inserted state engages behind the mounting, such that the securing device is engaged at the current profile.

21. Securing device according to any one of the preceding claims, **characterised in that** the further finger in the inserted state is arranged between the wall and the second connection.

22. Securing device according to any one of the preceding claims, **characterised in that** the height of the further finger corresponds approximately to the distance interval between the wall and the second connection.

23. System for securing a current profile to a wall of a motor vehicle, with
- a current profile according to Claim 1, and
- a securing device according to Claim 16.

24. Method for securing a current profile to a housing of a motor vehicle, wherein
- a current profile according to Claim 1 is pushed into a passage aperture of the housing, such that an offset element of the current profile is arranged in the passage aperture, and
- wherein a securing means according to Claim 16 is pushed into the mounting of the current profile by a transversal movement, such that the current profile is connected by non-positive fit to the housing.

## Revendications

1. Profilé électrique pour la traversée de câbles d'un véhicule automobile à travers une paroi de véhicule automobile ou la paroi d'une carrosserie de véhicule automobile, avec
- un premier raccord pour un câble électrique, et
- un deuxième raccord pour un câble électrique, sachant que
- le profilé électrique est doté, entre le premier raccord et le deuxième raccord, d'un décalage, qui permet le passage des câbles à travers la paroi,
**caractérisé en ce que** le profilé est doté d'un logement pour un dispositif de fixation, avec au moins deux doigts, de sorte que ledit dispositif de fixation puisse être inséré dans le logement pour la fixation du profilé électrique sur la paroi,
- sachant qu'un premier doigt peut être inséré dans le logement du profilé électrique, et
- sachant qu'un deuxième doigt, à l'état inséré, est en contact étroit avec le décalage.

2. Profilé électrique selon la revendication 1, **caractérisé en ce que** le dispositif de fixation peut être inséré dans le logement, parallèlement à la surface de la paroi.

3. Profilé électrique selon l'une des revendications précédentes, **caractérisé en ce que** le dispositif de fixation peut être inséré dans le logement par l'exécution d'un mouvement transversal.

4. Profilé électrique selon l'une des revendications précédentes, **caractérisé en ce que** le décalage est en forme de gradins.

5. Profilé électrique selon l'une des revendications précédentes, **caractérisé en ce que** le logement est aménagé sensiblement dans le décalage.

6. Profilé électrique selon l'une des revendications précédentes, **caractérisé en ce que** le profilé électrique est disposé dans une ouverture de passage, pratiquée dans la paroi.

7. Profilé électrique selon l'une des revendications précédentes, **caractérisé en ce que** le logement est une ouverture de passage, pratiquée dans le profilé électrique.

8. Profilé électrique selon l'une des revendications 1 à 4, **caractérisé en ce que** le logement s'étend essentiellement parallèlement à la surface de la carrosserie.

9. Profilé électrique selon l'une des revendications précédentes, **caractérisé en ce que** le logement est disposé de sorte que le profilé électrique soit en contact étroit avec la paroi, après que le dispositif de fixation ait été inséré.

10. Profilé électrique selon l'une des revendications précédentes, **caractérisé en ce qu'**une cosse de câble est prévue sur au moins un raccord.

11. Profilé électrique selon l'une des revendications précédentes, **caractérisé en ce que** le premier raccord et le deuxième raccord forment un angle directement sur le décalage.

12. Profilé électrique selon l'une des revendications précédentes, **caractérisé en ce que** le profilé électrique est doté d'une surface d'appui, qui est plus grande que l'ouverture de passage pratiquée dans la paroi, de sorte que, lors de la fixation avec les moyens de fixation, au moins la surface d'appui porte contre la carrosserie.

13. Profilé électrique selon l'une des revendications précédentes, **caractérisé en ce qu'**un nez d'arrêt est disposé sur le premier raccord de sorte que celui-ci s'enclenche dans une ouverture de la paroi lors de l'insertion du profilé électrique.

14. Profilé électrique selon l'une des revendications précédentes, **caractérisé en ce que** le profilé électrique est pourvu d'une gaine isolante entre le premier raccord et le deuxième raccord.

15. Profilé électrique selon l'une des revendications précédentes, **caractérisé en ce que** le premier raccord et / ou le deuxième raccord sont / est un conducteur plat.

16. Dispositif de fixation pour fixer le profilé électrique selon la revendication 1 à une paroi d'un véhicule automobile, avec
- au moins deux doigts,
- sachant qu'un premier doigt peut être inséré dans le logement du profilé électrique, et
- sachant qu'un deuxième doigt, à l'état inséré, est en contact étroit avec le décalage.

17. Dispositif de fixation selon la revendication 16, **caractérisé en ce qu'**un intervalle, formé entre le premier et le deuxième doigt, est réalisé de sorte que la broche s'engage dans l'intervalle, à l'état inséré.

18. Dispositif de fixation selon l'une des revendications précédentes, **caractérisé en ce que** le premier doigt s'amincit dans la direction d'insertion, de sorte que ledit premier doigt soit en contact étroit avec les parois intérieures du logement, à l'état inséré.

19. Dispositif de fixation selon l'une des revendications précédentes, **caractérisé en ce que** la largeur du premier doigt correspond sensiblement à la largeur du logement.

20. Dispositif de fixation selon l'une des revendications 17 à 19, **caractérisé en ce qu'**un autre doigt est disposé à côté du premier doigt, sachant que ledit autre doigt est doté d'un nez d'arrêt, de sorte que ledit nez d'arrêt s'agrippe à l'arrière du logement, à l'état inséré, de telle manière que le dispositif de fixation soit enclenché sur le profilé électrique.

21. Dispositif de fixation selon l'une des revendications précédentes, **caractérisé en ce que** le deuxième doigt, à l'état inséré, est disposé entre la paroi et le deuxième raccord.

22. Dispositif de fixation selon la revendication 21, **caractérisé en ce que** la hauteur de l'autre doigt correspond approximativement à l'intervalle entre la paroi et le deuxième raccord.

23. Dispositif de fixation d'un profilé électrique à une paroi d'un véhicule automobile, avec
- un profilé électrique selon la revendication 1, et
- un dispositif de fixation selon la revendication 16.

24. Procédé de fixation d'un profilé électrique à une carrosserie de véhicule automobile, dans lequel
- un profilé électrique selon la revendication 1 est inséré dans une ouverture de passage de la carrosserie g, de sorte qu'un décalage du profilé électrique soit disposé dans l'ouverture de passage, et
- dans lequel un moyen de fixation selon la revendication 16 est inséré dans le logement du profilé électrique par exécution d'un mouvement transversal, de sorte que le profilé électrique se trouve relié par adhérence à la carrosserie.
